## Europäisches Patentamt
## European Patent Office
## Office européen des brevets

(19)

(11) Veröffentlichungsnummer: **0 176 485**
**B1**

(12)
# EUROPÄISCHE PATENTSCHRIFT

(45) Veröffentlichungstag der Patentschrift:
**02.11.88**

(21) Anmeldenummer: **85810432.6**

(22) Anmeldetag: **23.09.85**

(51) Int. Cl.⁴: **B 62 D 11/18**, B 62 D 51/00

(54) **Lenkhilfe an einem zweispurigen Fahrzeug.**

(30) Priorität: **25.09.84 CH 4587/84**

(43) Veröffentlichungstag der Anmeldung:
**02.04.86 Patentblatt 86/14**

(45) Bekanntmachung des Hinweises auf die Patenterteilung:
**02.11.88 Patentblatt 88/44**

(84) Benannte Vertragsstaaten:
**AT DE FR IT**

(56) Entgegenhaltungen:
**DE-A-1 630 122**
**DE-A-2 350 493**
**DE-A-2 363 086**
**DE-A-2 437 514**
**DE-A-2 804 628**
**DE-A-3 102 143**
**DE-U-6 910 335**
**FR-A-1 502 111**

(73) Patentinhaber: **AEBI & CO. AG, MASCHINENFABRIK, Lyssachstrasse 44, CH- 3400 Burgdorf (CH)**

(72) Erfinder: **Jost, Hans, Bleichestrasse 29, CH- 4900 Langenthal (CH)**

(74) Vertreter: **Seehof, Michel, c/o AMMANN PATENTANWAELTE AG BERN Schwarztorstrasse 31, CH- 3001 Bern (CH)**

EP 0 176 485 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die vorliegende Erfindung betrifft eine Lenkhilfe an einem zweispurigen Fahrzeug mit angetriebenem gelenktem Fahrgestell, wobei am Fahrgestell ein Lenkorgan schwenkbar angebracht ist, dessen Verschwenkung im Gegentakt auf den Antrieb eines angetriebenen Paares von Rädern oder Raupen wirkt, derart, dass bei Schwenkung des Fahrzeuges die Antriebswirkung des äusseren Rades bzw. der äusseren Raupe gegenüber derjenigen des inneren Rades bzw. der inneren Raupe überwiegt.

Eine derartige Lenkhilfe ist bekannt aus der DE-A-3 102 143, wobei zwischen dem Antriebsmotor und jedem angetriebenen Rad je eine Kupplung und eine Bremse angeordnet sind. Bei Verschwenkung des Lenkorgans zum Lenken des Fahrzeugs wird jeweils die dem bezogen auf die Richtungsänderung des Fahrzeugs inneren Rad zugeordnete Kupplung ausgerückt und die Bremse eingerückt. Diese Steuerung ist umständlich und unsicher, d. h., es ist kaum eine fein abgestufte Regelung der Antriebswirkung der beiden Räder möglich, weil diese Regelung von Reibungsverhältnissen abhängig ist. Die Geschwindigkeitssteuerung ist völlig unabhängig von der Regelung der Antriebswirkung der Räder und erfolgt in üblicher Weise über die Drehzahlregelung des Motors.

Ziel vorliegender Erfindung ist es, eine eindeutige kontinuierliche Regelung der Antriebsverhältnisse zu schaffen und diese mit einer Regelung der Geschwindigkeit zu kombinieren. Dieses Ziel wird gemäss kennzeichnendem Teil des Anspruchs 1 erreicht. Dank den stufenlosen Getrieben kann eine sichere, feine Steuerung der Antriebswirkung der beiden Räder oder Raupen im Gegentakt und zudem eine Regelung der mittleren Geschwindigkeit durch Steuerung der Getriebe erzielt werden. Damit ist der weitere Vorteil verbunden, dass der Motor stets mit optimaler Drehzahl bei hohem Drehmoment und Wirkungsgrad arbeiten kann.

Die Erfindung wird nun anhand eines in der Zeichnung dargestellten Ausführungsbeispiels näher erläutert.

Fig. 1 zeigt eine Seitenansicht einer handgeführten Arbeitsmaschine mit Lenkhilfe, ohne Arbeitsgeräte,

Fig. 2 zeigt eine Draufsicht auf die Arbeitsmaschine und

Fig. 3 und 4 zeigen Längsschnitte durch einzelne Elemente der Lenkhilfe.

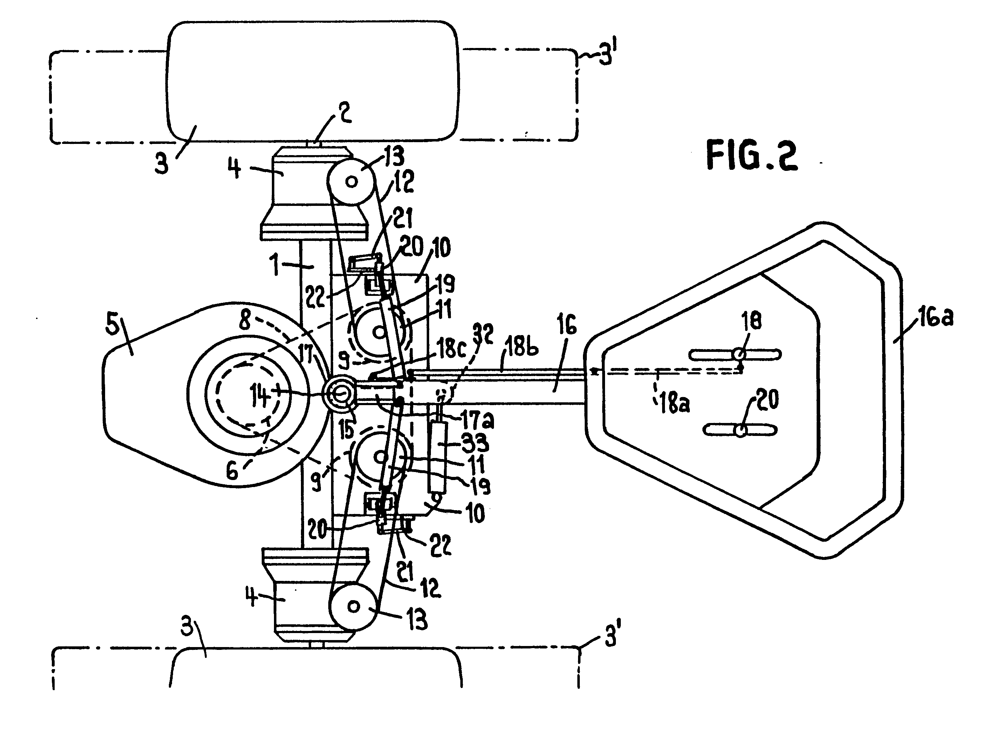

Die dargestellte Arbeitsmaschine, beispielsweise Motormäher, Schneefräse oder dergleichen weist ein Fahrgestell 1 mit einer Achse 2 auf. Die Räder 3 sind einzeln drehbar gelagert und über je ein Schneckengetriebe 4 antreibbar. Wie in Fig. 2 in strickpunktierten Linien angedeutet, könnten anstelle der Antriebsräder 3 Antriebsraupen 3' vorhanden sein, beispielsweise im Falle einer Schneefräse. Am Fahrgestell 1 ist der Motor 5 montiert, der unten mit einer Riemenscheibe 6 versehen ist. Über Riemen 7 kann eine nicht dargestellte Arbeitsgerätschaft, beispielsweise ein Mähbalken oder eine Schneefräse, angetrieben werden. Es können auch austauschbare Arbeitsgeräte vorhanden sein. Über einen Riemen 8 ist der Motor mit Antriebsriemenscheiben 9 von zwei stufenlosen hydrostatischen Getrieben 10 gekuppelt. Die oben liegenden Abtriebsriemenscheiben 11 dieser beiden Getriebe sind mittels Zahnriemen 12 mit den Antriebsriemenscheiben 13 der beiden Schneckengetriebe 4 gekuppelt. Der Motor kann daher über den Riemen 8, die Getriebe 10, die Riemen 12 und die Getriebe 4 die Räder 3 oder Raupen 3' mit angemessener Drehzahl antreiben, wobei die Riemen und Getriebe mit relativ hoher Drehzahl und geringen Drehmomenten arbeiten können.

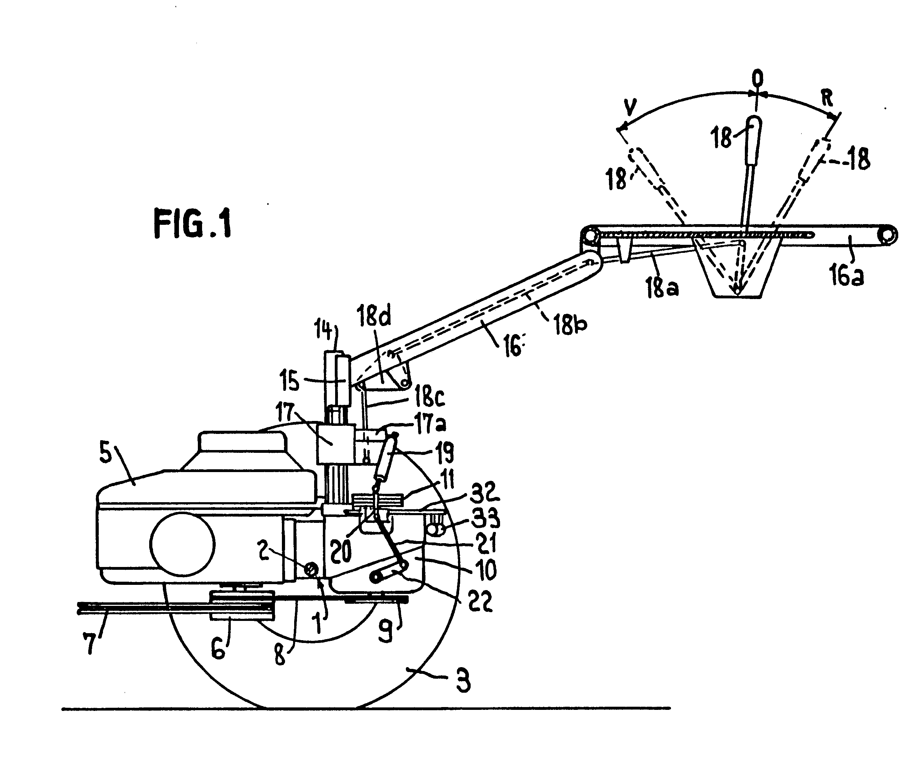

Zwischen den beiden Getrieben ist am Fahrgestell eine Säule 14 montiert, auf der eine Hülse 15 drehbar angeordnet ist. Das obere Ende dieser Hülse 15 ist mit dem Lenkgestänge 16 mit dem Lenkholm 16a starr verbunden. Der untere Teil der Hülse 15 ist mit axialen Nuten versehen und auf diesem Teil ist ein gemeinsamer Regelkopf 17 axial, d. h., vertikal verschiebbar, aber unverdrehbar angeordnet. Der Regelkopf 17 folgt also den Schwenkbewegungen der Hülse 15 auf der Säule 14 bei Verschwenkung des Lenkgestänges 16 und ist ausserdem vertikal einstellbar. Diese vertikale Einstellung erfolgt über ein Steuergestänge mit Stangenteilen 18a, 18b und 18c sowie einer schwenkbaren Umlenkplatte 18d. Das Steuergestänge ist gekuppelt mit einem Steuerknüppel 18 der im Lenkgestänge schwenkbar gelagert ist. Er steht in Fig. 1 in einer neutralen Stellung entsprechend dem Stillstand des Fahrzeuges, auch bei laufendem Motor, indem die beiden hydrostatischen Getriebe 10 sich in der Nullstellung befinden und keine Drehbewegung übertragen. Der Steuerknüppel 18 kann aus der ausgezogen dargestellten Nullstellung in eine maximale Vorwärtsstellung V sowie eine maximale Rückwärtsstellung R verschwenkt werden. Zur Regelung der Geschwindigkeit können auch alle Zwischenstellung beliebig gewählt werden. Gemäss Fig. 2 ist ein zweiter Steuerknüppel 20 zum Ein- und Ausschalten der Arbeitsgeräte vorgesehen. Das zugehörige Steuergestänge ist weder dargestellt noch beschrieben, da es für die Erfindung ohne Bedeutung ist.

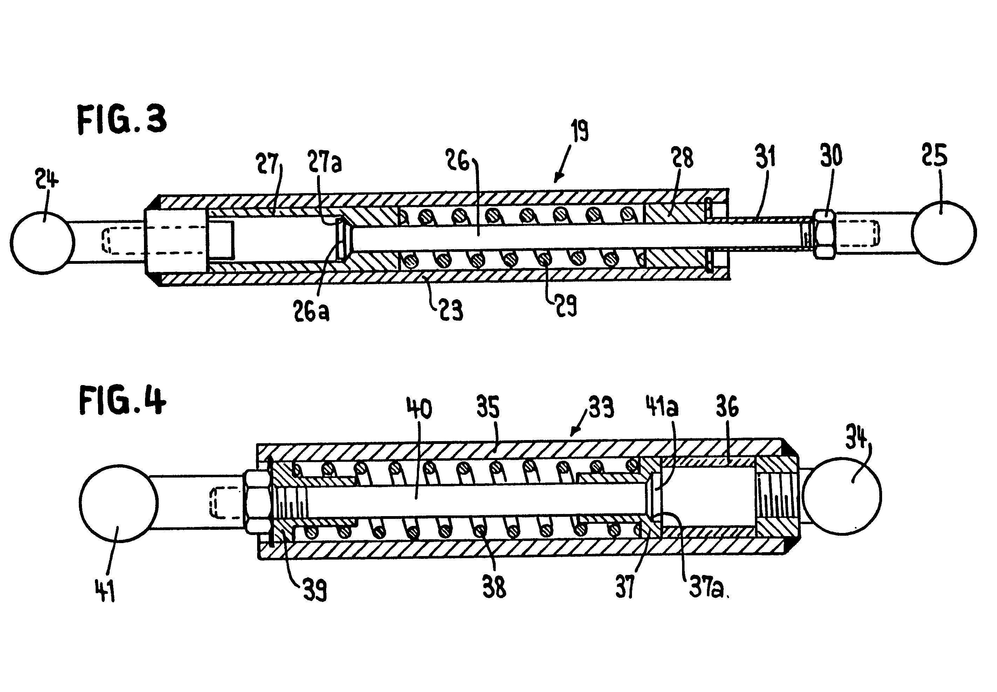

Über das Gestänge 18abc wird bei der soeben erwähnten Verschwenkung des Steuerknüppels 18 der Regelkopf 17 aus der in Fig. 1 dargestellten neutralen Nullstellung bei Vorwärtsfahrt mehr oder weniger nach unten, bei Rückwärtsfahrt mehr oder weniger nach oben verschoben. Die Steuerung der Getriebe 10 erfolgt hierbei über zwei symmetrisch angeordnete Steuergestänge, die mit einem Ausleger 17a des Regelkopfes 17 verbunden sind. Jedes dieser Gestänge weist einen zur Achse und Schwenkebene des Regelkopfes 17 abwärts geneigtes Übertragungselement 19 auf, welches in Fig. 3 näher dargestellt ist. Die Übertragungsorgane 19 wirken über je eine schwenkbare Scheibe 20 und Gestänge 21 auf die Steuerhebel 22 der Getriebe 10. Die Übertragungsorgane 19 weisen einen Mantel 23 auf, der fest mit der einen Gelenkkugel 24 am einen Ende des Organs verbunden ist. Die Gelenkkugel 25 am anderen Ende des Organs ist mit einer Stange 26 verbunden, die den Mantel 23 verschiebbar durchsetzt. Sie weist am Ende einen Teller 26a auf, der auf einem Sitz 27a einer Hülse 27 liegt. Zwischen der Hülse 27 und einer Hülse 28, die mittels Seegerring am anderen Ende des Mantels 23 gesichert ist, liegt eine Druckfeder 29. Zwischen einer auf einem Gewinde der Stange 26 sitzenden Mutter 30 und der Hülse 28 befindet sich eine auf der Stange 26 verschiebbare Hülse 31 durch welche Kräfte an die Hülse 28 übertragen werden können. Dieses Übertragungsorgan überträgt in der normalen Betriebsstellung nach Fig. 3 die Bewegungen vom Regelkopf 17 an den Getriebehebel 22 quasi starr, indem die Vorspannung der Feder 29 über den zur Einstellung des Getriebes erforderlichen Kräften liegt. Wenn jedoch der Steuerhebel 22 des einen oder anderen Getriebes 10 die Stellung für maximales Übersetzungsverhältnis in Vorwärtsrichtung erreicht, wird ein Anschlag wirksam und eine weitere Bewegung des Regelkopfes 17 in gleicher Richtung bewirkt ein Zusammendrücken der Feder 29 zwischen der sich nach innen schiebenden Hülse 28 und der Hülse 27, wobei der Teller 26a vom Sitz 27a abgehoben wird. Der Weg des Tellers 26a in der Bohrung der Hülse 27 bestimmt den freien Weg, der durch die Übertragungsorgane 19 gebildeten Schleppkupplung.

Zwischen dem Fahrgestell 1 und einem mit dem unteren Ende der Hülse 15 gekuppelten Arm 32 ist ein Rückführorgan 33 angeordnet, welches der Rückführung des Lenkgestänges in seine symmetrische Nullstellung gemäss Fig. 2 bezüglich des Fahrgestells dient. Fig. 4 zeigt die Einzelheiten des Organs 33. Die eine Gelenkkugel 34 desselben ist fest mit einem Mantel 35 verbunden, in den der Kugel 34 benachbart eine Distanzhülse 36 eingesetzt ist. Auf diese Distanzhülse stützt sich eine weitere Hülse 37 ab, auf welche eine Druckfeder 38 aufgesetzt ist. Das andere Ende dieser Druckfeder sitzt auf einer ähnlichen Hülse 39, die ihrerseits mittels eines Segerringes im Mantel 35 gesichert ist. Durch die beiden Hülsen 37 und 39 und die Feder 38 erstreckt sich eine Stange 40, die mit der anderen Gelenkkugel 41 des Organs verbunden ist. Sie liegt mit einem Teller 41a auf einem Sitz 37a der Hülse 37. Wird das Rückführorgan gestaucht, wird die Hülse 39 entgegen dem Druck der Feder 38 in den Mantel 35 eingeschoben, wobei sich der Teller 41a vom Sitz 37a abhebt. Der Druck der Feder 38 sucht das Organ in die dargestellte, nach aussen kräftefreie Lage zurückzuversetzen und damit das Lenkgestänge in die symmetrische Nullstellung zu bringen. Wird das Lenkgestänge gegenüber dem Fahrgestell in der anderen Richtung verschwenkt, erfolgt eine Verlängerung des Rückführorgans 33, wobei die Kugel 34 den Mantel 35 mit der darin durch Segring gesicherten Hülse 39 bezüglich der Stange 40 nach rechts in Fig. 4 verschiebt. Damit wird wiederum die Feder 38 wirksam und sucht das Rückführelement in die nach aussen kräftefreie Lage nach Fig. 4 und das Lenkgestänge in die symmetrische Nullage zu bringen.

Aus dem Obenstehenden geht bereits ziemlich klar hervor, wie die Geschwindigkeitsregelung sowie die Wahl der Fahrtrichtung mittels des Knüppels 18 erfolgt. Jede Verschwenkung dieses Knüppels hat eine vertikale Verschiebung des Regelkopfes 17 zur Folge und damit über die Elemente 19, 20, 21 und 22 die entsprechende, gleichsinnige Einstellung der stufenlosen Getriebe 10 zwischen voller Vorwärtsfahrt in Position V und maximaler Rückwärtsfahrt in Position R. Dieser Geschwindigkeits- und Richtungssteuerung überlagert sich nun eine zusätzliche Regelung als Lenkhilfe. Gleichgültig in welcher vertikalen Position sich der Regelkopf befinde, wird eine Relativschwenkung des Lenkgestänges 16 gegenüber dem Fahrgestell zu einer entsprechenden Drehung des Regelkopfes 17 führen und diese Drehung wirkt sich nun über den Fortsatz 17a und die Übertragungsorgane 19 in einer zusätzlichen Regelung der beiden Getriebe 10 grundsätzlich im Gegentakt aus. Wird also beispielsweise in Fig. 2 betrachtet das Lenkgestänge im Uhrzeigersinn nach unten verschwenkt, wird über das dort untere Übertragungsorgan 19 der Steuerhebel 22 des zugeordneten Getriebes zusätzlich nach unten verschwenkt, was einer Zunahme des Übersetzungsverhältnisses in Vorwärtsrichtung entspricht. Es leuchtet ein, dass auf der anderen Seite, d. h. in Fig. 2 oben, die gegenteilige Wirkung eintritt, d. h., das Übersetzungsverhältnis des dort liegenden Getriebes wird herabgesetzt. Es wird also nun das in Fig. 2 unten liegende Rad 3 schneller angetrieben und das in Fig. 3 oben liegende Rad langsamer. Dieser Geschwindigkeitsunterschied bewirkt eine Drehung der Achse 2 und des Fahrgestelles 1 im gleichen Sinn wie die anfängliche Verschwenkung des Lenkgestänges 16 und damit eine wirksame Unterstützung der Schwenkung des ganzen Fahrzeuges im Sinne der eingeleiteten Lenkbewegung. Diese allgemeine Regel gilt allerdings nur, wenn nicht ohnehin schon die maximale Vorwärtsgeschwindigkeit eingestellt ist. In diesem Falle kann bei Verschwenkung des Lenkgestänges 16 das Übersetzungsverhältnis des einen Getriebes 10 nicht noch erhöht werden, sondern seine Stellung maximaler Übersetzung ist durch Anschlag begrenzt. Somit wird nun das zugehörige Übertragungsorgan 19 in der oben erwähnten Weise federnd gestaucht und das zugehörige Getriebe 10 behält sein maximales Übersetzungsverhältnis bei. Dagegen wird das Übersetzungsverhältnis des anderen Getriebes in der beschriebenen Weise herabgesetzt und damit die Lenkhilfe erzielt.

Die Lenkhilfe wirkt auch bei Stillstand, weil nämlich dann eine Verschwenkung des Lenkgestänges 16 gegenüber dem Fahrgestell ein Antreiben des einen Rades vorwärts und des anderen Rades rückwärts im Sinne der Verschwenkung des Lenkgestänges zur Folge hat. Sie wirkt auch bei Rückwärtsfahrt, indem nämlich das Rad, gegen welches hin das Lenkgestänge verschwenkt wird, langsamer und das gegenüberliegende Rad schneller wird. Wenn auch die beschriebene Lenkhilfe speziell für handgeführte einachsige Arbeitsmaschinen anwendbar ist, schliesst dies andere Anwendungen nicht aus. Dieselbe Lenkhilfe kann von Vorteil sein für Einachstraktoren, die mit Anhängern gekuppelt sind und ebenfalls direkt von Hand gelenkt werden. Es wäre aber auch eine Anwendung bei irgendwelchen zwei- oder mehrachsigen Fahrzeugen mit einem angetriebenen und gelenkten Fahrgestell denkbar. Die Lenkung braucht nicht mittels eines schwenkbar am Fahrgestell angebrachten Lenkgestänges zu erfolgen, sondern es könnte ein besonderer Lenkhebel an einem mit den Fahrgestell starr verbundenen Führungsgestänge angeordnet sein. Die beschriebene Ausführung mit hydrostatischen Getrieben, die stufenlos für Vor- und Rückwärtsfahrt regelbar sind, hat den grossen Vorteil, dass eine kombinierte, kontinuierliche Regelung der Geschwindigkeit und Lenkhilfe möglich ist. Die Lenkhilfe könnte beispielsweise auch mittels stufenlos regelbarer Riemengetriebe realisiert werden.

Beim dargestellten Ausführungsbeispiel wird durch einen besonders weiten Radstand hohe Stabilität für steiles Gelände angestrebt. Bei Fahrzeugen mit kleinerem Radstand, beispielsweise Schneefräsen, könnten die Getriebe nötigenfalls anders angeordnet sein, beispielsweise vertikal übereinander, statt horizontal nebeneinander.

Aus dem oben erwähnten Umstand, dass bei maximaler Fahrgeschwindigkeit das beim Wenden äussere Rad nicht schneller, sondern nur das innere Rad langsamer wird, ergibt sich eine Reduktion der durchschnittlichen Drehzahl der Räder beim Wenden. Die Bedienungsperson braucht daher beim Wenden trotz des relativ grossen auszuführenden Wendekreises nicht schneller zu gehen als bei der Geradeausfahrt. Dieser Vorteil könnte selbst bei niedrigen Fahrgeschwindigkeiten erzielt werden, wenn die Steuerung der stufenlosen Getriebe alinear in dem Sinne erfolgt, dass stets für einen bestimmten Lenkausschlag die Drehzahlerhöhung geringer ist als die Drehzahlreduktion.

## Patentansprüche

1. Lenkhilfe an einem zweispurigen Fahrzeug mit angetriebenem gelenktem Fahrgestell, wobei am Fahrgestell (1) ein Lenkorgan (16) schwenkbar angebracht ist, dessen Verschwenkung im Gegentakt auf den Antrieb eines angetriebenen Paares von Rädern (3) oder Raupen wirkt, derart, dass bei Schwenkung des Fahrzeugs die Antriebswirkung des äusseren Rades (3) bzw. der äusseren Raupe gegenüber derjenigen des inneren Rades bzw. der inneren Raupe überwiegt, dadurch gekennzeichnet, dass jedem Rad (3) bzw. jeder Raupe ein stufenlos regelbares Getriebe (10) zugeordnet ist, wobei die Übersetzungsverhältnisse der beiden Getriebe im Gegentakt regelbar sind und dass ein gemeinsames Regelorgan (17) vorgesehen ist, das mit dem Lenkorgan (16) schwenkbar und durch ein Steuerorgan (18) zur Wahl der Fahrtrichtung und -geschwindigkeit axial verschiebbar ist und dass das Regelorgan (17) über je ein zu seiner Schwenkebene und -achse geneigtes Übertragungsorgan (19) auf jedes Getriebe (10) für die Räder oder Raupen wirkt.

2. Lenkhilfe nach Anspruch 1, dadurch gekennzeichnet, dass jedem Rad (3) bzw. jeder Raupe ein hydrostatisches Getriebe (10) zugeordnet ist.

3. Lenkhilfe nach Anspruch 1 oder 2, dadurch gekennzeichnet, dass die Übertragungsorgane (19) zwischen dem Lenkorgan (16) und den Getrieben (10) für die Räder (3) oder Raupen federnd sind und dass eine maximale Getriebeübersetzung bzw. eine maximale Betriebsgeschwindigkeit durch Anschlag bestimmt ist.

4. Lenkhilfe nach einem der Ansprüche 1 bis 3, dadurch gekennzeichnet, dass Getriebe (10) zur stufenlosen Drehzahl- bzw. Geschwindigkeitsregelung vor- und rückwärts vorgesehen sind.

## Claims

1. An auxiliary steering for a two-track vehicle with a driven, guided chassis to which is orientably mounted a steering element (16) the orientation of which acting in push-pull on the drive of a pair of driven wheels (3) or tracks so that at the time of swinging of the vehicle, the driving effect of the external wheel (3), resp. the external track overbalances the one of the internal wheel, resp of the internal track, characterized in that the each wheel (3), resp. to each track is associated a continuously adjustable gear-box (10), the transmission ratios of both gear-boxes being adjustable in push-pull and in that there is provided a common adjusting element (17) which is capable to be oriented by the steering element (16) and by an axially movable control element (18) for the choice of the direction of displacement and of the speed and in that the adjusting element (17) acts by a transmission element (19) inclined with respect to its plane or axis of swivelling on each gear-box (10) for the wheels or the tracks.

2. An auxiliary steering according to claim 1, characterized in that to each wheel (3), resp. to each track is associated a hydrostatic gear-box (10).

3. An auxiliary steering according to claim 1 or 2, characterized in that the transmission elements (19) between the steering element (16) and the gear-boxes (10) for the wheels (3) or the tracks are elastic and in that a maximum transmission ratio, resp. a maximum working speed is determined by abutment.

4. An auxiliary steering according to one of the claims 1 to 3, characterized in that the gear-boxes (10) are foreseen for a continuous adjustment of the number of turns, resp of the speed, forward and backward.

## Revendications

1. Auxiliaire de direction pour véhicule à deux voies avec un chassis guidé entraîné auquel est monté de manière orientable un organe de direction (16) dont l'orientation agit en opposition sur l'entraînement d'une paire de roues (3) ou de chenilles entraînées, de sorte que, lors du pivotement du véhicule, l'effet d'entraînement de la roue extérieure (3), resp. de la chenille extérieure dépasse celui de la roue intérieure, resp. de la chenille intérieure, caractérisé en ce qu'à chaque roue (3), resp. à chaque chenille est associée une boîte de vitesses (10) à réglage continu, les rapports de transmission des deux boîtes de vitesses étant réglable en opposition et en ce qu'il est prévu un organe de réglage commun (17) qui est orientable par l'organe de direction (16) et par un organe de commande (18) déplaçable axialement pour le choix de la direction de déplacement et de la vitesse et en ce que l'organe de réglage (17) agit par un organe de transmision (19) incliné par rapport à son plan et axe de pivotement sur chaque boîte de vitesses (10) pour les roues ou les chenilles.

2. Auxiliaire de direction selon la revendication 1, caractérisé en ce qu'à chaque roue (3), resp. à chaque chenille est associée une boîte de vitesses hydrostatique (10).

3. Auxiliaire de direction selon la revendication 1 ou 2, caractérisé en ce que les organes de transmission (19) entre l'organe de direction (16) et les boîtes de vitesses (10) pour les roues (3) ou les chenilles sont à ressort et en ce qu'un rapport de transmission maximum, resp. une vitesse de service maximum est déterminé par butée.

4. Auxiliaire de direction selon l'une des revendications 1 à 3, caractérisé en ce que des boîtes de vitesses (10) sont prévues pour le réglage continu du nombre de tours, resp. de la vitesse, en marche avant et en marche arrière.

FIG.1

FIG.2

# FIG.3

# FIG.4

0 176 485